# FASCICULE DE BREVET EUROPEEN

(11) **EP 0 319 416 B1**
(45) Date de publication et mention de la délivrance du brevet: **24.02.1993**
(21) Numéro de dépôt: 88403028.9
(22) Date de dépôt: 01.12.1988
(51) Int. Cl.: B32B 17/10, C03C 27/12, C03C 17/00, C03C 17/32, B29C 63/02

(54) **Procédé et dispositif pour revêtir une feuille de verre au moyen d'une feuille souple**
Verfahren und Vorrichtung zum Beschichten einer Glasscherbe mit einer weichen Kunststoffolie
Process and apparatus for coating a sheet of glass with a soft sheet

(30) Priorité: 02.12.1987 DE 3740875
(43) Date de publication de la demande: 07.06.1989
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Leclere, Klemens, B-4721 Neu Moresnet (BE); Hammes, Friedhelm, D-5120 Herzogenrath (DE); Kessels, Hans-Willi, D-5120 Herzogenrath (DE)
(74) Mandataire: Muller, René

(56) Documents cités:
- EP-A- 0 248 706
- US-A- 3 518 137

## Description

La présente invention concerne un procédé pour revêtir une feuille de verre au moyen d'une feuille souple suivant lequel on guide la feuille de verre et la feuille souple de manière qu'elles se rejoignent sous un angle aigu, on les fait avancer de manière continue et on assemble de façon préliminaire la feuille souple à la feuille de verre à l'aide d'une pression agissant le long de la ligne de contact de la feuille souple et de la feuille de verre et résultant de l'évacuation de l'air, puis on assemble de façon définitive le préassemblage ainsi obtenu, à l'aide d'une élévation de température et d'une élévation de pression.

Par "feuilles de verre", on entend selon l'invention des vitrages ou supports transparents en verre ou en une matière plastique, telle le polycarbonate, plans ou bombés. Il peut s'agir de vitrages monolithiques ou feuilletés en verre et/ou en matière plastique.

Il est connu de revêtir des feuilles de verre, sur une face, au moyen d'une feuille souple de matière plastique. Les feuilles de matière plastique peuvent avoir des propriétés diverses et peuvent être destinées à diverses fins. Par exemple, la feuille souple peut servir de feuille antiéclat dans le cas de feuilles de verre de silicate. De telles feuilles antiéclat sont, en particulier, appliquées sur la face interne de pare-brise de véhicules automobiles. Elles évitent aux occupants du véhicule d'être touchés par des éclats de verre en cas d'accident de la circulation. Dans le cas de plaques ou de feuilles de matière plastique, les feuilles souples peuvent être utilisées pour augmenter la résistance aux rayures.

On connaît plusieurs procédés pour appliquer la feuille de matière plastique sur la feuille de verre. Lorsqu'il s'agit d'une feuille faite d'une matière thermoplastique ou qu'elle est pourvue d'une couche d'adhésif thermoplastique sur son coté à coller à la feuille de verre, l'opération de revetement a généralement lieu en deux stades : au cours du premier stade est effectué un assemblage préliminaire évitant les inclusions d'air et, au cours du second stade, a lieu l'assemblage définitif faisant appel à une élévation de température et une élévation de pression, par exemple dans un autoclave sous pression.

L'application de la feuille souple et l'assemblage préliminaire peuvent être réalisés dans l'état actuel de la technique au moyen d'un procédé de calandrage, par exemple celui qui est décrit dans le brevet européen n° 0 015 209. Dans ce cas, la feuille de verre à revêtir et la feuille de matière plastique souple passent entre des rouleaux, une bande continue de la feuille souple étant introduite dans l'emprise de calandrage d'un dispositif de calandrage sous un angle aigu par rapport à la feuille de verre et étant calandrée sur cette feuille de verre. Ce procédé s'est révélé efficace, mais nécessite la présence d'un dispositif de calandrage relativement encombrant.

Il est également connu de réaliser l'assemblage préliminaire de la feuille souple et de la feuille de verre en plaçant l'empilage formé de la feuille de verre et de la feuille souple dans une enceinte close, et en faisant le vide dans cette enceinte. Un tel procédé est décrit, par exemple, dans le document DE-PS 24 24 085. Ce procédé connu ne permet cependant pas une fabrication en continu.

L'invention a pour but de procurer un procédé d'assemblage préliminaire d'une feuille souple à une feuille de verre qui, d'une part, permette un circuit de production continu et, d'autre part, puisse être réalisé sans dispositif de calandrage spécial.

Ce but est atteint conformément à l'invention par le fait que, dans la zone précédant la ligne de contact de la feuille souple avec la feuille de verre, à l'aide d'un corps d'espacement qui s'étend transversalement par rapport à la direction de déplacement de la feuille de verre, et qui glisse d'une part sur la surface du verre et, d'autre part sur la feuille souple, on crée un espace qui se déplace de façon continue, cet espace étant délimité par la feuille souple, la feuille de verre et le corps d'espacement, tout en évacuant l'air de cet espace de façon continue par aspiration.

Suivant le procédé conforme à l'invention, l'assemblage préliminaire de la feuille souple à la feuille de verre s'effectue à la manière d'un procédé qui utilise le vide, mais de manière continue, ce qui permet d'intégrer aisément ce procédé dans un processus de fabrication continu. La feuille souple est pressée sur la feuille de verre, d'une manière excluant les bulles, par la différence de pression qui agit sur la feuille souple, suite à la dépression créée par l'aspiration. Le niveau de la dépression, c'est-à-dire le flux volumétrique d'aspiration, ainsi que la conformation des surfaces du corps d'espacement qui sont en contact avec la feuille de verre et avec la feuille souple doivent être choisis tels que le mouvement relatif glissant puisse se faire en dépit des forces de friction agissant entre, d'une part le corps d'espacement et, d'autre part la feuille souple et la feuille de verre.

L'évacuation de l'air par aspiration hors de l'espace creux formé entre la feuille souple et la feuille de verre est de préférence réalisée au moyen d'un ou de plusieurs ajutages à large fente qui, en tant que tels, forment le corps d'espacement par leurs surfaces externes.

Lorsqu'il s'agit d'appliquer une feuille souple sur des feuilles de verre planes ou bombées dans une seule direction, c'est-à-dire bombées de manière cylindrique, un ajutage à fente plan et rigide peut convenir. Même pour des feuilles de verre bombées, on peut utiliser un ajutage à fente rigide à condition que cet ajutage à fente présente une forme correspondant à celle des feuilles de verre.

Selon un développement avantageux de l'invention, on utilise cependant pour le revêtement de feuilles de verre bombées, des ajutages à fente large faits d'une matière caoutchouteuse et épousant la forme des feuilles de verre sous l'effet des forces exercées par la différence de pression. L'ajutage présente avantageusement une aptitude à la déformation élastique également dans le sens du plan de la fente pour que, même dans le cas d'une courbure tridimensionnelle de la ligne de contact entre la feuille souple et la feuille de verre, il puisse s'adapter de manière optimale à l'allure de cette ligne de contact courbe.

L'invention sera expliquée plus en détail ci-après avec référence aux dessins annexés, dans lesquels :

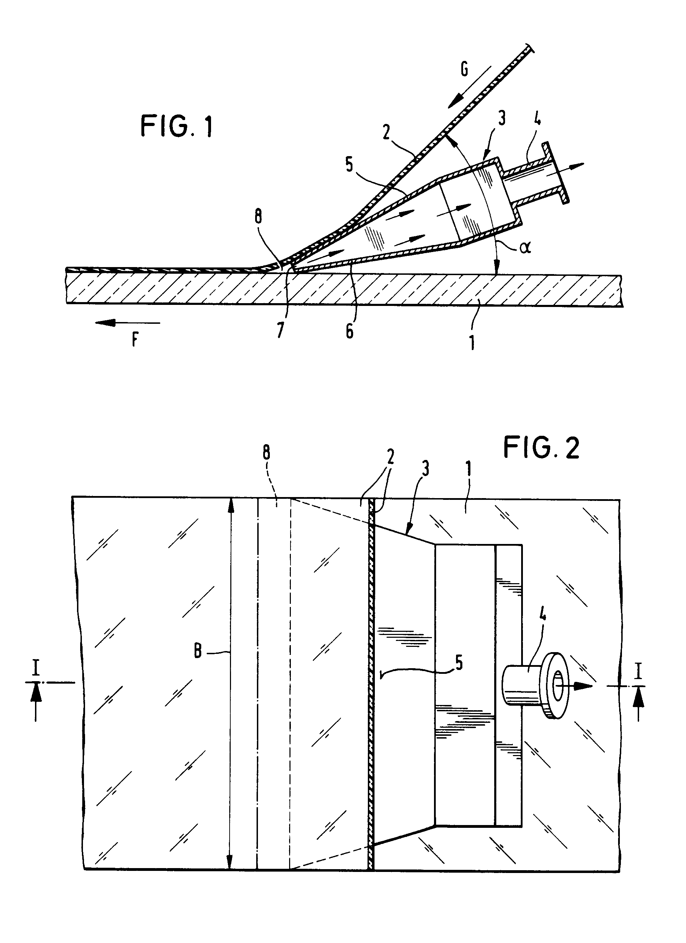

La figure 1 est une vue en coupe verticale d'une feuille de verre et d'une feuille souple pendant l'opération de revêtement au moyen d'un ajutage d'aspiration à large fente rigide ;
La figure 2 est une vue en plan de l'agencement représenté sur la figure 1 ;
La figure 3 est une vue en coupe verticale suivant la ligne III-III de la figure 4 d'un ajutage d'aspiration à large fente fait d'une matière élastiquement déformable, et
La figure 4 est une vue en coupe suivant la ligne IV-IV de la figure 3 de l'ajutage d'aspiration à large fente.

Sur les figures, la feuille de verre 1 à revêtir, sur une de ses faces, au moyen d'une feuille souple de matière plastique 2 est une feuille de verre monolithique. Il est évident que cette feuille de verre 1, comme déjà mentionné plus haut, peut également être une feuille de verre à plusieurs couches, par exemple un vitrage feuilleté courant tel que ceux qui sont utilisés pour les pare-brise de véhicules automobiles. De même, la feuille souple 2 peut être faite de diverses matières. Par exemple, il peut s'agir d'une feuille transparente formée d'au moins une couche de polyuréthane, par exemple une feuille à deux couches : une couche d'un polyuréthane hautement élastique et une couche adhésive d'un polyuréthane thermoplastique, ou une couche de polyuréthane ayant des propriétés d'absorbeur d'énergie, ces dernières couches étant orientées vers la feuille de verre. De telles feuilles de matière plastique sont décrites, par exemple dans les publications de brevets DE-PS 26 29 779 et EP 0 133 090.

La feuille de verre 1 est déplacée dans le sens de la flèche F sur un dispositif transporteur, non représenté, qui peut, par exemple, être une bande transporteuse. Au-dessus du dispositif transporteur, la feuille souple 2, au moyen de laquelle la feuille de verre sera revêtue, est conditionnée sous la forme d'une bande continue en un rouleau, de manière à pouvoir être dévidée du rouleau en une bande continue et elle est guidée dans le sens de la flèche G suivant un angle alpha aigu vers la feuille de verre 1. La bande continue enroulée, les moyens de montage du rouleau en rotation et les dispositifs de guidage de la bande continue sont des dispositifs courants et ne sont pas représentés pour plus de clarté.

Dans l'espace formé entre la feuille de verre 1 et la feuille souple 2 arrivant sur la feuille de verre 1 sous l'angle alpha est disposé un ajutage à large fente 3. L'ajutage à large fente 3 est raccordé par une tubulure 4 et une conduite, non représentée, à une pompe aspirante qui n'est pas représentée non plus. Vu en coupe transversale, l'ajutage à large fente présente deux parois convergentes 5, 6 qui forment la fente d'ajutage 7 à leurs extrémités. L'air est aspiré de manière continue hors de l'espace 8 par la fente d'ajutage 7, ce qui engendre une dépression dans l'espace 8. Sous l'effet de cette dépression ou de la suppression atmosphérique qu'elle provoque au-dessus de la feuille souple 2, cette dernière est pressée contre la paroi 5 de l'ajutage à large fente et s'applique tout contre cette paroi 5. De même, sous l'effet de la différence de pression engendrée par l'aspiration, l'extrémité antérieure de la paroi 6 de l'ajutage à large fente 3 est pressée sur la surface de la feuille de verre 1, ce qui produit également, entre la paroi 6 de l'ajutage et la surface de la feuille de verre 1, suivant la ligne de contact, une obturation essentiellement étanche à l'air. La paroi 6 peut éventuellement être pourvue, dans sa zone d'extrémité antérieure par laquelle elle glisse sur la surface de la feuille de verre, d'un revêtement élastique favorisant l'application étanche de la lèvre de l'ajutage sur la surface du verre. De même, la face externe de la paroi 5 de l'ajutage peut également être pourvue, dans la zone de la lèvre de l'ajutage contre laquelle la feuille souple 2 glisse, d'un revêtement approprié qui réduit le coefficient de friction entre la la feuille souple et la lèvre de l'ajutage et qui a également une influence favorable sur le contact étanche à l'air entre la lèvre de l'ajutage et la feuille souple.

Dans la zone de la fente 7, l'ajutage à large fente 3 présente une largeur B qui correspond à la largeur souhaitée de la feuille de verre revêtue. Dans le cas représenté, l'ajutage à large fente 3 présente, dans la zone de la fente, exactement la même largeur que la feuille de verre 1 et la feuille souple 2, mais la feuille de verre 1 et la feuille souple 2 peuvent aussi être de largeurs différentes. La largeur B de l'ajutage à large fente 3 peut également être supérieure ou inférieure à la largeur de la feuille souple 2 et/ou de la feuille de verre 1 sans que cela nuise sensiblement à l'exécution du procédé conforme à l'invention.

Dans le cas où il faut revêtir d'une feuille souple des feuilles de verre bombées de manière cylindrique ou sphérique, il convient d'utiliser pour l'aspiration de l'air, un ajutage à large fente qui soit suffisamment flexible pour épouser la courbure de la ligne suivant laquelle s'effectue le contact de la feuille souple avec la feuille de verre. Selon la forme de la feuille de verre, cette ligne peut aussi présenter une courbure bidimensionnelle, de sorte que l'ajutage à large fente doit admettre des déformations élastiques dans deux directions.

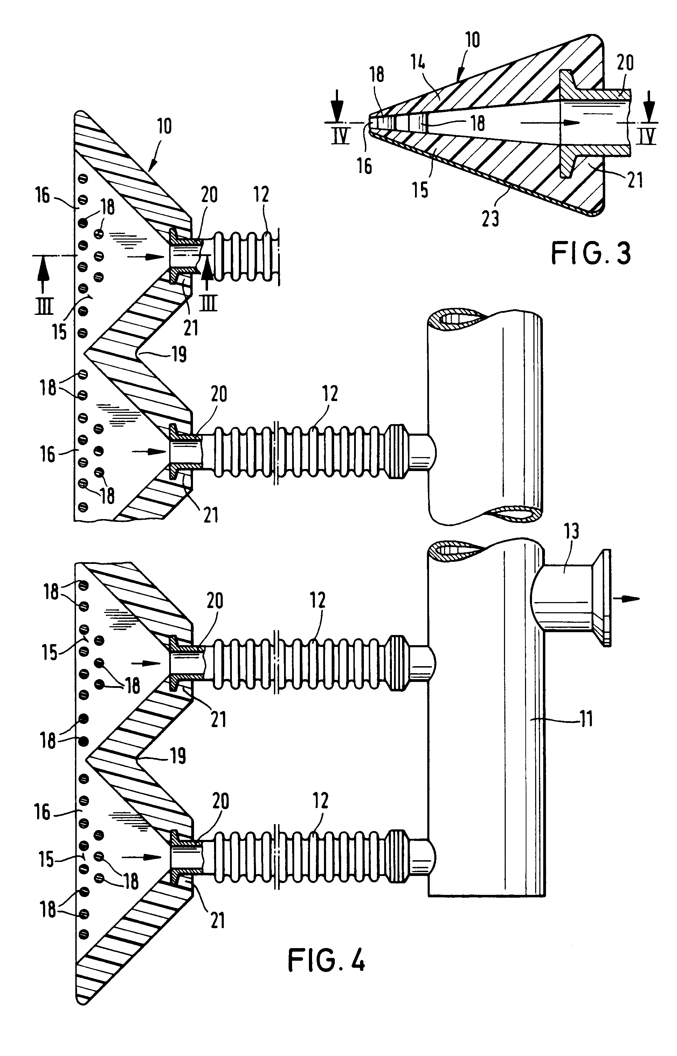

Une forme de réalisation d'un tel ajutage d'aspiration permettant une déformation élastique bidimensionnelle est représentée sur les Fig. 3 et 4. Cet ajutage d'aspiration est constitué du corps d'ajutage proprement dit 10 en matière flexible, par exemple en un élastomère caoutchouteux, d'un tube de distribution rigide 11 et de tuyaux souples ondulés déformables élastiquement 12 qui assurent la liaison entre le tube de distribution 11 et le corps d'ajutage 10. Le tube de distribution 11 est raccordé par une ou plusieurs tubulures 13 à un générateur de dépression approprié, par exemple, à un ventilateur aspirant.

Le corps d'ajutage 10 présente une section transversale convergente et est formé de deux lèvres d'ajutages 14 et 15 définissant une fente d'aspiration 16 à leur extrémité antérieure. Pour éviter que, dans les zones où l'épaisseur de paroi diminue, les lèvres 14, 15 de l'ajutage soient pressées l'une contre l'autre sous l'effet de la différence de pression, des entretoises 18, par exemple de section ronde, sont disposées entre les lèvres 14 et 15 de l'ajutage.

Pour augmenter sa flexibilité, le corps d'ajutage 10 est pourvu de renfoncements 19 dans son sens longitudinal. Les tubulures de raccordement 20 des tuyaux souples ondulés 12 sont avantageusement incorporées à la paroi postérieure 21 du corps d'ajutage 10 par vulcanisation.

Le corps d'ajutage 10 est pourvu sur sa face inférieure d'une couche 23 à faible coefficient de friction qui favorise le glissement sur la surface du verre. La lèvre supérieure 14 de l'ajutage peut éventuellement aussi être pourvue d'une telle couche de glissement.

Bien entendu, on peut également imaginer des formes de réalisation de dispositifs convenant pour les fins précitées, qui soient différentes de celles qui ont été décrites.

Le procédé et le dispositif décrits précédemment peuvent être utilisés, très généralement, pour l'assemblage préliminaire des vitrages dits asymétriques formés d'un support rigide monolithique ou feuilleté et d'une feuille de matière plastique souple ayant les propriétés désirées.

## Revendications

1. Procédé pour revêtir une feuille de verre au moyen d'une feuille souple suivant lequel on guide la feuille de verre et la feuille souple de manière qu'elles se rejoignent sous un angle aigu, on les fait avancer ensemble de manière continue et on les assemble de façon préliminaire, à l'aide d'une pression agissant le long de la ligne de contact de la feuille souple et de la feuille de verre et résultant de l'évacuation de l'air, puis on assemble de façon définitive l'assemblage ainsi obtenu, à l'aide de la température et de la pression, caractérisé en ce que dans la zone précédant la ligne de contact de la feuille souple avec la feuille de verre, à l'aide d'un corps d'espacement qui s'étend transversalement par rapport à la direction de déplacement de la feuille de verre, et qui glisse d'une part sur la surface du verre et d'autre part sur la feuille souple, on crée un espace qui se déplace de façon continue, qui est délimité par la feuille souple, la feuille de verre et le corps d'espacement, et duquel on évacue l'air de façon continue par aspiration.

2. Procédé selon la revendication 1, caractérisé en ce que pour aspirer l'air de façon continue, on utilise un ajutage à large fente (large par rapport au diamètre du tuyau au des tuyaux d'évacuation de l'air) qui forme simultanément le corps d'espacement.

3. Dispositif pour la mise en oeuvre du procédé selon une des revendications 1 ou 2, caractérisé en ce qu'il comprend un ajutage à large fente épousant la forme de la feuille de verre.

4. Dispositif selon la revendication 3, caractérisé en ce que l'ajutage à large fente est fait d'une matière élastiquement déformable qui épouse la forme de la feuille de verre sous l'effet de la différence de pression engendrée par l'aspiration.

5. Dispositif selon la revendication 4, caractérisé en ce que l'ajutage à large fente est constitué par un corps d'ajutage (10) élastiquement déformable et par un tube de distribution rigide (11) qui est raccordé au corps d'ajutage (10) par l'intermédiaire de tuyaux souples on-dulés flexibles (12).

6. Dispositif selon la revendication 5, caractérisé en ce que le corps d'ajutage (10) est fait d'un élastomère.

7. Dispositif selon une des revendications 4 ou 5, caractérisé en ce que le corps d'ajutage (10) vu dans le sens longitudinal, est pourvu de renfoncements (19) augmentant son aptitude à la déformation.

8. Dispositif selon une des revendications 5 à 7, caractérisé en ce que les deux lèvres d'ajutage (14, 15) du corps d'ajutage (10) sont réciproquement soutenues par des entretoises (18) dans la zone antérieure de la fente d'ajutage (16).

9. Dispositif selon une des revendications 3 à 8, caractérisé en ce que l'ajutage à large fente (3, 10) est pourvu d'une couche (23) augmentant son aptitude au glissement sur ses surfaces qui sont en contact glissant avec la feuille de verre et/ou la feuille souple.

10. Application du procédé et du dispositif selon une des revendications 1 à 9 à la fabrication d'un vitrage de sécurité formé d'un support monolithique ou feuilleté et d'une feuille souple comprenant au moins une couche de polyuréthane.

## Claims

1. Method of covering a glazing sheet with a flexible sheet, according to which the glazing sheet and the flexible sheet are guided in such a way that they meet each other at an acute angle, they are advanced continuously and they are assembled in preliminary manner by a pressure acting along the contact line between the flexible sheet and the glazing sheet and resulting from the evacuation of the air, then the assembly thus obtained is definitively assembled together by heat and pressure, characterized in that, in the zone preceding the contact line between the flexible sheet and the glazing sheet, by the use of a spacer body extending transversely to the direction of travel of the glazing sheet and sliding, on the one hand, over the surface of the glazing and, on the other hand, over the flexible sheet, a space is created which moves forward continuously and is de limited by the flexible sheet, the glazing sheet and the spacer body, and from which space the air is continuously evacuated by suction.

2. Method according to Claim 1, characterized in that a nozzle having a wide slit (wide by comparison with the diameter of the air extraction pipe or pipes) and which simultaneously forms the spacer body is used for extracting the air in continuous manner.

3. Device for carrying out the method according to one of Claims 1 or 2, characterized in that it comprises a wide-slit nozzle hugging the shape of the glazing sheet.

4. Device according to Claim 3, characterized in that the wide-slit nozzle is made of an elastically deformable material which hugs the shape of the glazing sheet under the effect of the pressure difference created by the suction.

5. Device according to Claim 4, characterized in that the wide-slit nozzle is constituted of an elastically deformable nozzle body (10) and of a rigid header pipe (11), which is connected to the nozzle body (10) by means of flexible corrugated pipes (12).

6. Device according to Claim 5, characterized in that the nozzle body (10) is made of an elastomer.

7. Device according to one of Claims 4 or 5, characterized in that the nozzle body (10), as viewed in the longitudinal direction, is provided with recesses (19) for increasing its ability to deform.

8. Device according to one of Claims 5 to 7, characterized in that the two nozzle lips (14, 15) of the nozzle body (10) are reciprocally supported by bracings (18) in the front zone of the nozzle slit (16).

9. Device according to one of Claims 3 to 8, characterized in that the wide-slit nozzle (3, 10) is provided with a coating (23) for increasing its suitability for sliding on its surfaces which are in sliding contact with the glazing sheet and/or the flexible sheet.

10. Application of the method and of the device according to one of Claims 1 to 9 to the manufacture of a safety glazing pane composed of a monolithic or laminated support and a flexible sheet comprising at least one film of polyurethane.

## Patentansprüche

1. Verfahren zum Beschichten einer Glasscheibe mit einer biegsamen Folie, bei dem die Glasscheibe und die biegsame Folie unter einem spitzen Winkel zusammengeführt und in bekannter Weise gemeinsam kontinuierlich fortbewegt, und die biegsame Folie mit Hilfe von entlang der Berührungslinie der biegsamen Folie und der Glasscheibe einwirkenden und aus der Entfernung der Luft resultierendem Druck mit der Glasscheibe vorläufig verbunden, und die so erhaltene Schichtenanordnung unter Anwendung von erhöhter Temperatur und erhöhtem Druck endgültig miteinander verbunden wird, **dadurch gekennzeichnet,** daß im Bereich vor der Kontaktlinie der biegsamen Folie mit der Glasscheibe mit Hilfe eines sich quer zur Bewegungsrichtung der Glasscheibe erstreckenden und einerseits auf der Gasoberfläche und andererseits auf der biegsamen Folie gleitenden Distanzkörpers ein sich kontinuierlich verschiebender, durch die biegsame Folie, die Glasscheibe und den Distanzkörper begrenzter Hohlraum geschaffen und aus diesem Hohlraum die Luft kontinuierlich abgesaugt wird.

2. Verfahren nach Anspruch 1, dadurch gekennzeichnet, daß zum kontinuierten Absaugen der Luft eine Breitschlitzdüse mit einem im Verhältnis zum Durchmesser der Luftabsaugleitung bzw. der Luftabsaubleitungen breiten Düsenschlitz verwendet wird, die gleichzeitig den Distanzkörper bildet.

3. Vorrichtung zur Durchführung des Verfahrens nach Anspruch 1 oder 2, dadurch gekennzeichnet, daß sie aus einer der Form der Glasscheibe angepaßten Breitschlitzdüse besteht.

4. Vorrichtung Anspruch 3, dadurch gekennzeichnet, daß die Breitschlitzdüse aus einem elastisch verformbaren Material besteht, die sich unter dem Einfluß des durch die Saugwirkung erzeugten Differenzdrucks der gegebenen Form der Glasscheibe anpaßt.

5. Vorrichtung nach Anspruch 4, dadurch gekennzeichnet, daß die Breitschlitzdüse aus einem elastisch verformbaren Düsenkörper (10) und einem starren Verteilerrohr (11) besteht, das mit dem elastischen Düsenkörper (10) über flexible Wellschläuche (12) in Verbindung steht.

6. Vorrichtung nach Anspruch 5, dadurch gekennzeichnet, daß der Düsenkörper (10) aus einem Elastomer besteht.

7. Vorrichtung nach einem der Ansprüche 4 oder 5, dadurch gekennzeichnet, daßs der Düsenkörper (10) in seiner Längsrichtung gesehen mit seine Verformbarkeit erhöhenden Einbuchtungen (19) versehen ist.

8. Vorrichtung nach einem der Ansprüche 5 bis 7, dadurch gekennzeichnet, daß die beiden Düsenlippen (14,15) des Düsenkörpers (10) im vorderen Bereich des Düsenspaltes (16) durch Distanzstege (18) gegeneinander abgestützt sind.

9. Vorrichtung nach einem der Ansprüche 3 bis 8, dadurch gekennzeichnet, daß die Breitschlitzdüse (3, 10) auf ihren mit der Glasscheibe oder/und der biegsamen Folie in gleitendem Kontakt stehenden Oberflächen mit einer die Gleitfähigkeit erhöhenden Schicht (23) versehen sind.

10. Anwendung des Verfahrens und der Vorrichtung nach einem der Ansprüche 1 bis 9 für die Herstellung einer aus einer monolithischen oder mehrschichtigen Trägerscheibe und einer wenigstens eine Schicht aus Polyurethan umfassenden biegsamen Folie bestehenden Sicherheitsglasscheibe.
